# EUROPEAN PATENT APPLICATION

(11) **EP 4 202 115 A1**
(43) Date of publication of application: **28.06.2023**
(21) Application number: 22214920.5
(22) Date of filing: 20.12.2022
(51) Int. Cl.: D21F 1/32, B08B 3/02, B65G 45/22, B08B 5/04

(54) **FABRIC CLEANING SYSTEMS AND METHODS USING SYNCHRONIZED CROSS-MACHINE DIRECTION TRAVERSING CLEANING HEADS**

(30) Priority: 21.12.2021 US 202163292129 P; 15.04.2022 US 202263331287 P; 03.05.2022 US 202263337953 P; 16.12.2022 US 202218082698
(71) Applicant: Kadant Nordic AB, 561 33 Huskvarna (SE)
(72) Inventor: RASCHKA, Werner Michael, 41460 Neuss (DE); DE BONI, Marcelo, Shrewsbury, 01545 (US)
(74) Representative: Haseltine Lake Kempner LLP

(57) **Abstract**

A fabric cleaning system is disclosed that includes first and second cleaning heads on opposite sides of a fabric that travels along a machine direction, each of the first and second cleaning heads being mounted on first and second beams that extend along a cross-machine direction, and each of the first and second cleaning heads being traversable along the respective first and second beams.

## Description

### PRIORITY

The present application claims priority to U.S. Provisional Patent Application No. 63/292,129 filed December 21, 2021, U.S. Provisional Patent Application No. 63/331,287 filed April 15, 2022, and U.S. Provisional Patent Application No. 63/337,953 filed May 3, 2022, the disclosures of all of which are hereby incorporated by reference in their entireties.

### BACKGROUND

The invention generally relates to cleaning systems, and relates in particular to cleaning head systems for use in fabric cleaning systems.

Cleaning head systems may be used in a variety of industrial applications, including for example, papermaking, tissue making, fibre mat processing (e.g., glass fibre mat), as well as many further applications involving fabrics, clothing, and other belt applications.

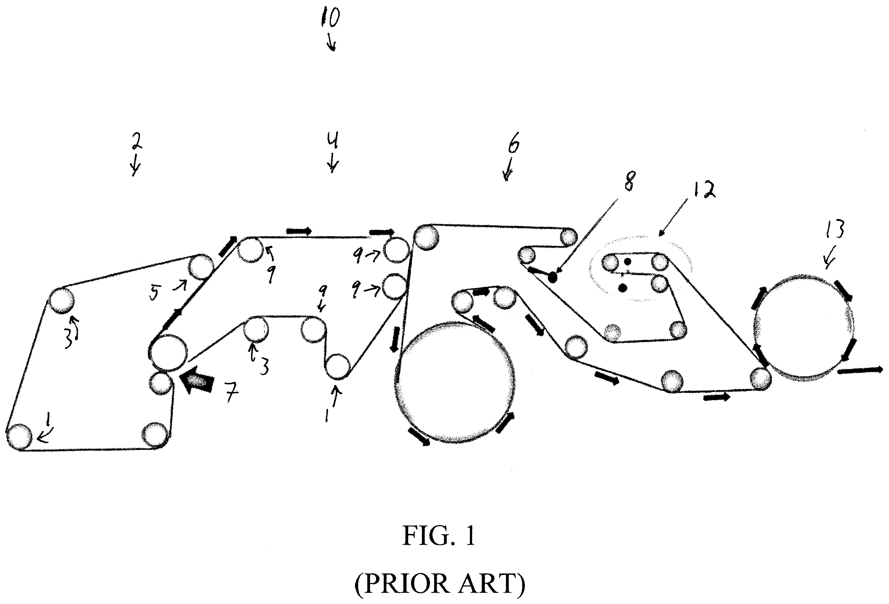

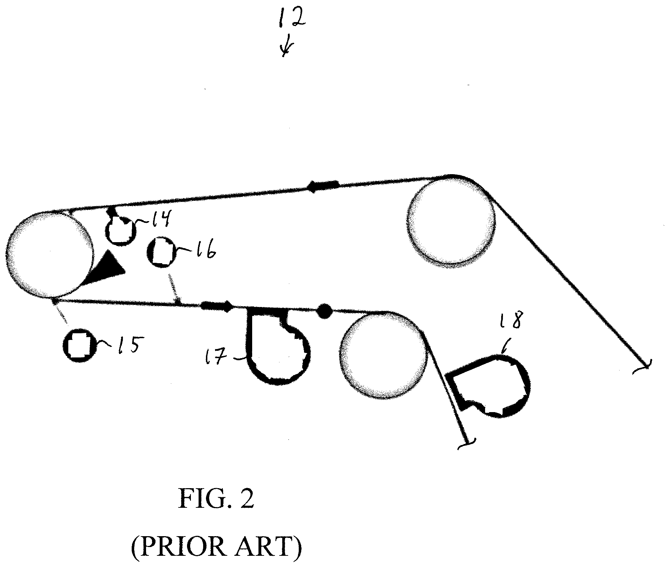

In a through-air-dried (TAD) tissue machine, for example, a tissue web is formed between an outer and inner fabric after which it is transferred to a TAD fabric and then to the surface of a rotating, heated dryer can. After leaving the dryer can, the TAD fabric passes through a TAD fabric cleaning station area 12 and is then treated by a release oil shower 8 as generally shown at 10 in Figure 1. The system includes an outer fabric system 2, an inner fabric system 4, a TAD fabric system 6, a TAD fabric cleaning station area 12, and a dryer system 13. The systems include stretch rolls 1, guide rolls 3, pivot rolls 5, a head box 7 and the release oil shower 8. With reference to Figure 2, the cleaning TAD fabric cleaning station area 12 of the TAD machine 10 of Figure 1, includes showers shown at 14, 15, 16 and vacuum suction boxes 17, 18. In particular, the fabric engages the flooded nip shower 14, the high-pressure shower 15 on the sheet side, the high pressure shower 16 on the non-sheet side, the vacuum box 17 on the sheet side, and the vacuum box 18 on the non-sheet side. The systems, including those in the cleaning area, are provided in the full cross-machine direction, and their use involves not insubstantial water and energy consumption.

There remains a need therefore for more efficient and more economical cleaning systems for use in fabric cleaning systems.

### SUMMARY

In accordance with an aspect, the invention provides a fabric cleaning system including first and second cleaning heads on opposite sides of a fabric that travels along a machine direction, each of the first and second cleaning heads being mounted on first and second beams that extend along a cross-machine direction, and each of the first and second cleaning heads being traversable along the respective first and second beams.

In accordance with another aspect, the invention provides a method of cleaning fabric including providing first and second cleaning heads on opposite sides of a fabric, moving the fabric along a machine direction, and traversing each of the first and second cleaning heads along respective first and second beams during cleaning.

In accordance with a further aspect, the invention provides a fabric cleaning system comprising for use in a roll processing system. The fabric cleaning system includes a first traversing cleaning head that is directed toward a sheet side of a fabric, said first traversing cleaning head being adapted to traverse a cross-machine direction of the fabric, and a second traversing cleaning head that is directed toward a roll side of the fabric that is opposite the sheet side of the fabric, said second traversing cleaning head also being adapted to traverse the cross-machine direction of the fabric.

### BRIEF DESCRIPTION OF THE DRAWINGS

The following description may be further understood with reference to the accompanying drawings in which:
Figure 1 shows an illustrative diagrammatic view of a through-air-dried tissue machine of the prior art;
Figure 2 shows an illustrative diagrammatic view of the cleaning station area in the tissue machine of Figure 1;
Figure 3 shows an illustrative diagrammatic view of a fabric cleaning system in accordance with an aspect of the present invention that includes a dual beam traversing cleaning system;
Figure 4 shows an illustrative diagrammatic enlarged view of the first and second traversing cleaning heads of Figure 3;
Figure 5 shows an illustrative diagrammatic enlarged side view of the first traversing cleaning head of Figure 4;
Figure 6 shows an illustrative diagrammatic underside view of the portion of the first traversing cleaning head of Figure 5 facing the fabric surface;
Figure 7 shows an illustrative diagrammatic enlarged view of the second traversing cleaning head of Figure 3;
Figure 8 shows an illustrative diagrammatic underside view of the nozzle apertures in the second traversing cleaning head facing the fabric surface in accordance with an aspect of the present invention including a plurality of apertures; and
Figure 9 shows an illustrative diagrammatic underside view of the nozzle aperture in the second traversing cleaning head facing the fabric surface in accordance with an aspect of the present invention including a single enlarged aperture.

The drawings are shown for illustrative purposes only.

### DETAILED DECRIPTION

In accordance with various aspects, the invention provides an improved dual-beam, traversing shower cleaning concept to simultaneously clean both the product (sheet side) and roll side of machine fabrics typically used in paper, tissue, and non-woven materials (such as glass mat) manufacturing processes. This new cleaning concept utilizes two synchronized, traversing cleaning heads: one from the sheet-side and one from the roll side. The traversing cleaning head assembly of the sheet side beam that contains spray nozzles and a two-zone vacuum hood (one for the evacuation of the flooded nip water and one for the evacuation of the cleaning water). The traversing cleaning head of the roll side beam contains a spray nozzle for flooding the nip between the fabric and the roll and an additional trailing air-doctor or Uhle (vacuum) box, after the fabric has left the roll, to ensure maximum dryness of the fabric as it exits the cleaning zone and thus eliminating the need for a conventional full-width Uhle box or full-width air knife.

This new cleaning concept is an improvement over the prior art as it will help to reduce the usage of valuable resources such as water and energy. The invention also provides savings by reducing the consumption of cleaning chemistries/agents and by optimizing the performance of and extending the life of machine fabrics-thereby reducing the number of fabrics consumed over a given time-period. In addition to those applications mentioned above, this cleaning concept could be used in many other manufacturing processes where contamination needs to be removed from a machine fabric, conveyor belt or web conveying rolls.

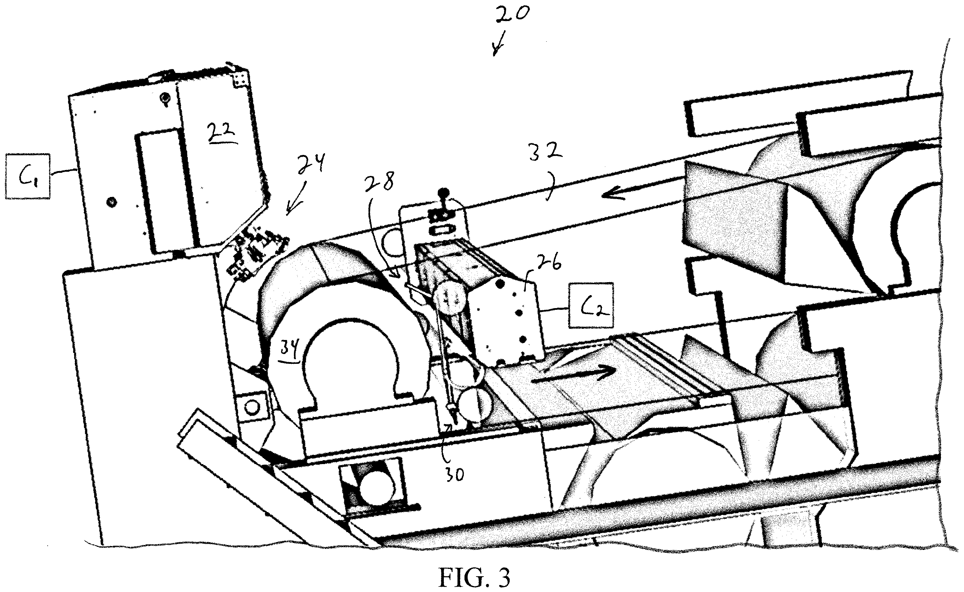

Figure 3, for example, shows at 20 a dual beam cleaning system in accordance with an aspect of the present invention. The system 20 includes a first traversing cleaning head 24 that travels along a first beam 22, and a second traversing cleaning head 28 provides fluid under high pressure (e.g., water), and travels along a second beam 26. The second traversing cleaning head also includes an air-doctor or a vacuum box 30 for removing any remaining water from the fabric 32 after leaving the roll 34. Movement of the cleaning heads 24, 28 is synchronized, e.g., via synchronizing controllers C₁ and C₂, or via mechanical synchronization. The synchronization ensures that each cleaning head 24, 28 is positioned on opposite sides of the same area of the fabric 32 at all times.

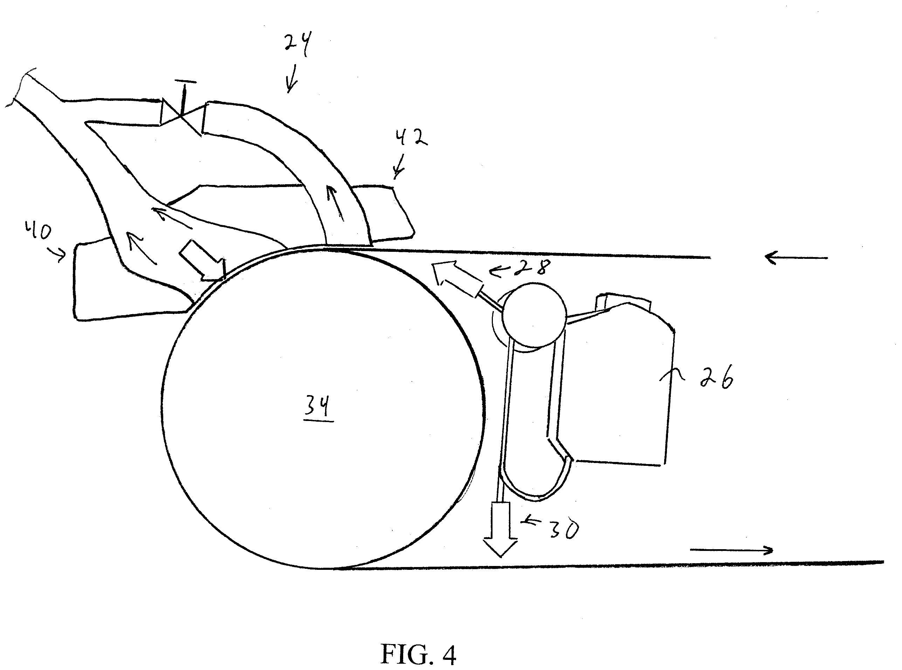

The first traversing cleaning head 24 includes a first area 40 that provides fluid under high pressure (e.g., water) application as well as vacuum, and a second area 42 that provides vacuum as shown in Figure 4. The second traversing cleaning head 28 provides fluid under pressure (e.g., water). The application of the water under pressure against the roll side of the fabric 32 is applied to the same position of the fabric as the application of the vacuum at the second area 42 on the sheet side of the fabric 32. As the cleaning heads 24, 28 move along their respective beams 22, 26 in the cross-machine direction, their movements are synchronized with one another to permit the vacuum at 42 to cooperate with the fluid under pressure at the applicable flooded region of the nip. Generally, the cleaning head 24 cleans from the sheet side through the fabric 32, cleaning head 28 cleans from the roll side of the fabric, and air-doctor 30 blows, or vacuum box sucks out remaining water from the roll side following the roll 34.

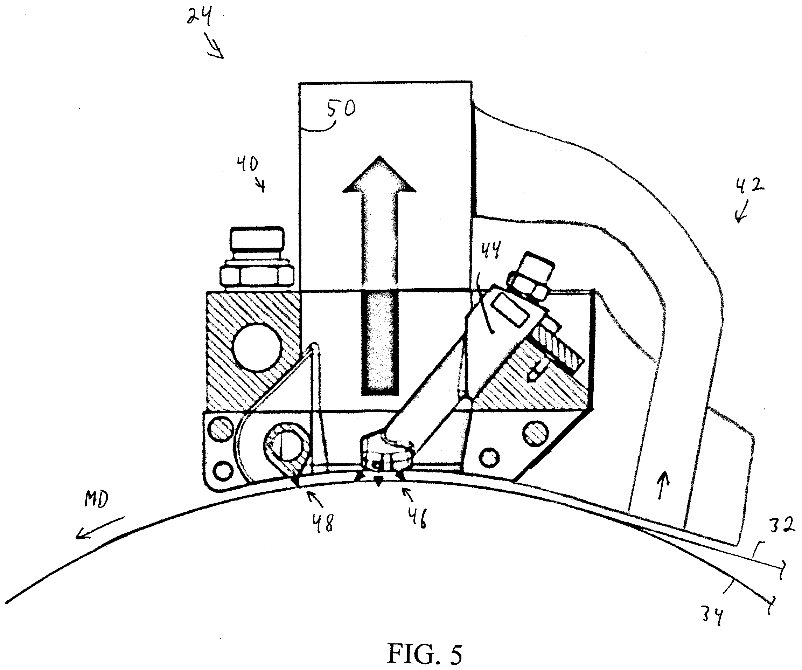

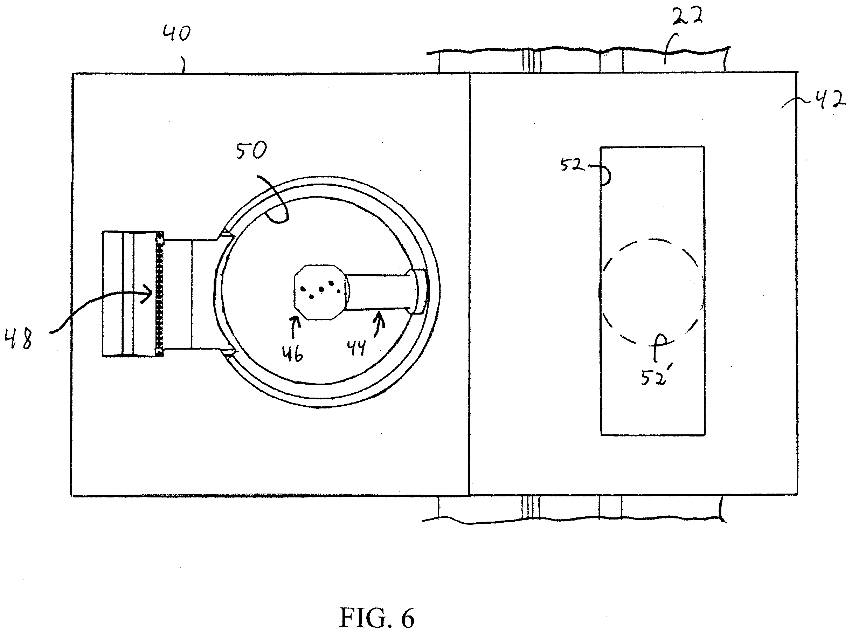

Figure 5 shows an enlarged view of the first traversing cleaning head 24, and Figure 6 shows an underside view of the first traversing cleaning head shown in Figure 5. The traversing cleaning head 24 with removable nozzle body is mounted on a rail 22 traversing the surface which is to be cleaned. The number of spray nozzles utilized can be varied and is determined based on the width of the machine and desired traversing speed. The nozzle spray angle and orifice diameter can also vary and is determined based on the application needs. As shown in Figures 5 and 6, the area 40 includes a nozzle body 44 with a plurality of nozzles 46 at an end thereof that provide fluid (e.g., water) under pressure to the sheet surface of the fabric. Positive air pressure may also be provided by an air knife as shown at 48 that may be provided as directed to the surface being cleaned (air flow may be directed at inward angles). Vacuum is provided at area 40 through conduit 50 that surrounds the nozzle body end, and this vacuum is used to remove as much water as possible that is in the fabric or sprayed away from the fabric, as well as to collect the contaminants and fibres. As also shown in Figure 6, the area 42 includes a vacuum opening, which could be rectangular as shown at 52 or round as shown at 52', through which additional vacuum is provided on the sheet side of the fabric opposite the roller nip, to collect out-bursting water from the cleaning head 28.

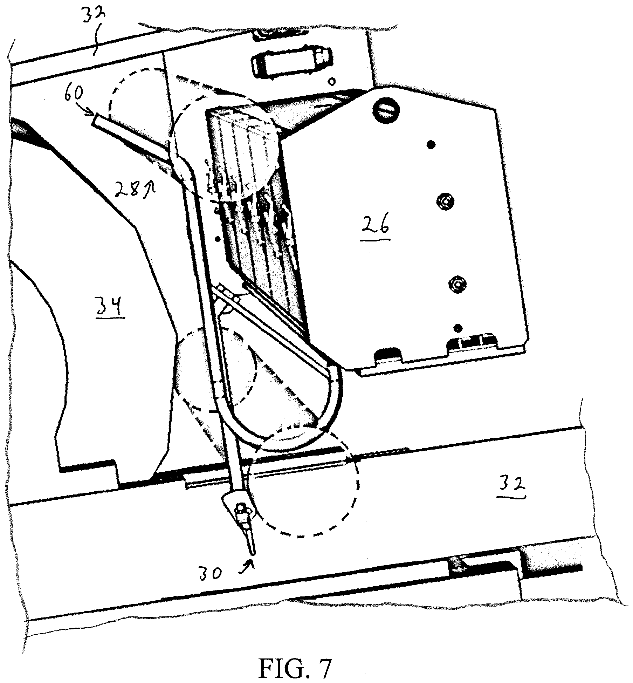

With reference to Figure 7, the second traversing cleaning head 28 includes nozzles 60 for flooding the roll side of the roller nip (and directly opposite the vacuum opening 52 on the opposite side of the fabric 32). The flooded nip cleaning head 28 with removable nozzle body is mounted on a rail traversing the surface which is to be cleaned. Both beams 22, 26 track to the same position. The traversing cleaning heads are synchronized through mechanical (cardan drive) or electronic coupling. The number of nozzles is related to the parameters of the machine, like width, speed. The flooded nip nozzle spray angle and orifice diameter can also vary and is determined based on the application needs. Additional cleaning fluids may also be provided at the roll nip as required during machine cleaning.

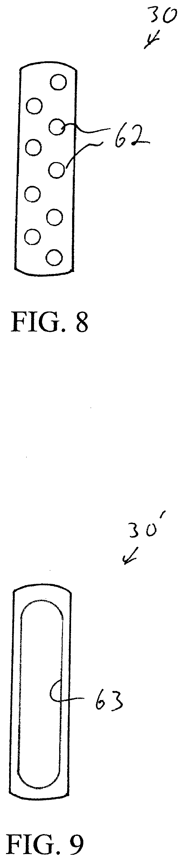

The cleaning head 28 also includes an air knife 30 that applies forced air or vacuum to the roll side of the fabric 32 following the roll 34. Figure 8 shows an underside of the air knife or vacuum slot 30, which includes a plurality of apertures 62 (e.g., two rows of apertures extending in the cross-machine direction) as shown in Figure 8 or a vacuum slot 63 in an air knife or vacuum slot 30' as shown in Figure 9 based on the particular application and web speed. In other applications, apertures may extend in the machine direction. The air-doctor 30 after the fabric has left the roll is also aligned at the same position as the cleaning head and flooded nip head.

Those skill in the art will appreciate that numerous modifications and variations may be made to the above disclosed embodiments without departing from the scope of the present invention.

For the avoidance of doubt, the present disclosure includes the subject matter recited in the following numbered Statements:
Statement 1. A fabric cleaning system comprising first and second cleaning heads on opposite sides of a fabric that travels along a machine direction, each of the first and second cleaning heads being mounted on first and second beams that extend along a cross-machine direction, and each of the first and second cleaning heads being traversable along the respective first and second beams.
Statement 2. The fabric cleaning system as recited in Statement 1, wherein movement of the first and second cleaning heads along the first and second beams respectively is synchronized with one another.
Statement 3. The fabric cleaning system as recited in any of Statements 1-2, wherein the second cleaning head is directed toward a roll surface of the fabric, and the first cleaning head is directed toward a non-roll surface of the fabric.
Statement 4. The fabric cleaning system as recited in Statement 3, wherein the second cleaning head is directed toward the first cleaning head on the opposite side of the fabric.
Statement 5. The fabric cleaning system as recited in any of Statements 1-4, wherein the first cleaning head provides vacuum in the first area and fluid under positive pressure together with vacuum in a second area.
Statement 6. The fabric cleaning system as recited in Statement 5, wherein the second area follows the first area in a roll direction.
Statement 7. The fabric cleaning system as recited in any of Statements 1-6, wherein the second cleaning head includes a nozzle for providing fluid under positive pressure to a roll nip.
Statement 8. The fabric cleaning system as recited in any of Statements 1 - 7, wherein the second cleaning head includes an air-doctor for applying air under positive pressure or a vacuum box to a roll side of the fabric following the roll.
Statement 9. A method of cleaning fabric comprising providing first and second cleaning heads on opposite sides of a fabric, moving the fabric along a machine direction, and traversing each of the first and second cleaning heads along respective first and second beams during cleaning.
Statement 10. The method as recited in Statement 9, wherein movement of the first and second cleaning heads along the first and second beams respectively is synchronized with one another.
Statement 11. The method as recited in any of Statements 9 - 10, wherein the second cleaning head is directed toward a roll side of the fabric, and the first cleaning head is directed toward a non-roll side of the fabric.
Statement 12. The method as recited in Statement 11, wherein the second cleaning head is directed toward the first cleaning head on the opposite side of the fabric.
Statement 13. The method as recited in any of Statements 9 - 12, wherein the first cleaning head provides vacuum in a first area and fluid under positive pressure together with vacuum in a second area.
Statement 14. The method as recited in Statement 13, wherein the second area follows the first area in a roll direction.
Statement 15. The method as recited in any of Statements 9 - 14, wherein the second cleaning head includes a nozzle for providing fluid under positive pressure to a roll nip and vacuum.
Statement 16. The method as recited in any of Statements 9 - 15, wherein the second cleaning head includes an air-doctor for applying air under positive pressure or a vacuum to a roll side of the fabric following the roll.
Statement 17. A fabric cleaning system comprising for use in a roll processing system, said fabric cleaning system comprising:
   a first traversing cleaning head that is directed toward a sheet side of a fabric, said first traversing cleaning head being adapted to traverse a cross-machine direction of the fabric; and
   a second traversing cleaning head that is directed toward a roll side of the fabric that is opposite the sheet side of the fabric, said second traversing cleaning head also being adapted to traverse the cross-machine direction of the fabric.
Statement 18. The fabric cleaning system as recited in Statement 17, wherein the first traversing cleaning head and the second traversing cleaning head are synchronized to traverse in the cross-machine direction together.
Statement 19. The fabric cleaning system as recited in any of Statements 17 - 18, wherein the first traversing cleaning head provides fluid under positive pressure and provides a vacuum to the exposed side of the fabric.
Statement 20. The fabric cleaning system as recited in Statement 19, wherein the fluid under positive pressure includes a liquid provided at a liquid nozzle and air provided at an air nozzle.
Statement 21. The fabric cleaning system as recited in any of Statements 17 - 20, wherein the second traversing cleaning head provides liquid under positive pressure to the roll side of the fabric.
Statement 22. The fabric cleaning system as recited in any of Statements 17 - 21, wherein the second traversing cleaning head provides air under positive pressure to the roll side of the fabric.
Statement 23. The fabric cleaning system as recited in any of Statements 17 - 21, wherein the second traversing cleaning head provides vacuum to the roll side of the fabric.

## Claims

1. A fabric cleaning system comprising first and second cleaning heads on opposite sides of a fabric that travels along a machine direction, each of the first and second cleaning heads being mounted on first and second beams that extend along a cross-machine direction, and each of the first and second cleaning heads being traversable along the respective first and second beams.

2. The fabric cleaning system as claimed in claim 1, wherein movement of the first and second cleaning heads along the first and second beams respectively is synchronized with one another.

3. The fabric cleaning system as claimed in any of claims 1-2, wherein the second cleaning head is directed toward a roll surface of the fabric, and the first cleaning head is directed toward a non-roll surface of the fabric, optionally wherein the second cleaning head is directed toward the first cleaning head on the opposite side of the fabric.

4. The fabric cleaning system as claimed in any of claims 1-3, wherein the first cleaning head provides vacuum in the first area and fluid under positive pressure together with vacuum in a second area, optionally wherein the second area follows the first area in a roll direction.

5. The fabric cleaning system as claimed in any of claims 1-4, wherein the second cleaning head includes a nozzle for providing fluid under positive pressure to a roll nip.

6. The fabric cleaning system as claimed in any of claims 1-5, wherein the second cleaning head includes an air-doctor for applying air under positive pressure or a vacuum box to a roll side of the fabric following the roll.

7. A method of cleaning fabric comprising providing first and second cleaning heads on opposite sides of a fabric, moving the fabric along a machine direction, and traversing each of the first and second cleaning heads along respective first and second beams during cleaning.

8. The method as claimed in claim 7, wherein movement of the first and second cleaning heads along the first and second beams respectively is synchronized with one another.

9. The method as claimed in any of claims 7-8, wherein the second cleaning head is directed toward a roll side of the fabric, and the first cleaning head is directed toward a non-roll side of the fabric, optionally wherein the second cleaning head is directed toward the first cleaning head on the opposite side of the fabric.

10. The method as claimed in any of claims 7-9, wherein the first cleaning head provides vacuum in a first area and fluid under positive pressure together with vacuum in a second area, optionally wherein the second area follows the first area in a roll direction.

11. The method as claimed in any of claims 7 - 10, wherein the second cleaning head includes:
a) a nozzle for providing fluid under positive pressure to a roll nip and vacuum.
b) an air-doctor for applying air under positive pressure or a vacuum to a roll side of the fabric following the roll.

12. A fabric cleaning system comprising for use in a roll processing system, said fabric cleaning system comprising:
a first traversing cleaning head that is directed toward a sheet side of a fabric, said first traversing cleaning head being adapted to traverse a cross-machine direction of the fabric; and
a second traversing cleaning head that is directed toward a roll side of the fabric that is opposite the sheet side of the fabric, said second traversing cleaning head also being adapted to traverse the cross-machine direction of the fabric.

13. The fabric cleaning system as claimed in claim 12, wherein the first traversing cleaning head and the second traversing cleaning head are synchronized to traverse in the cross-machine direction together.

14. The fabric cleaning system as claimed in any of claims 12 - 13, wherein the first traversing cleaning head provides fluid under positive pressure and provides a vacuum to the exposed side of the fabric, optionally wherein the fluid under positive pressure includes a liquid provided at a liquid nozzle and air provided at an air nozzle.

15. The fabric cleaning system as claimed in any of claims 12 - 14, wherein the second traversing cleaning head provides:
a) liquid under positive pressure to the roll side of the fabric.
b) air under positive pressure to the roll side of the fabric; and/or
c) vacuum to the roll side of the fabric.
